# EUROPEAN PATENT APPLICATION

(11) **EP 4 848 794 A1**
(43) Date of publication of application: **02.12.2026**
(21) Application number: 24920335.7
(22) Date of filing: 25.01.2024
(51) Int. Cl.: H04W 24/10, H04W 16/28, H04W 72/231, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing, 100190 (CN); CHEN, Lan, Beijing, 100190 (CN)
(74) Representative: Hoffmann Eitle
(86) International application number: PCT/JP2024/002207
(87) International publication number: WO 2025/158613

(57) **Abstract**

A terminal according to an aspect of the present disclosure includes: a receiving section that receives, in a case where Multi Input Multi Output (MIMO) is applied, configuration information for Channel State Information (CSI) reporting triggered by the terminal or an event; and a control section that performs, based on the configuration information, CSI reporting of at least one of a serving beam and a candidate beam. An aspect of the present disclosure enables reporting of a serving beam / candidate beam to be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), from the point of view of overhead/latency reduction, beam reporting triggered by a terminal (user terminal, User Equipment (UE)) or an event is under study.

However, in a case where Multi Input Multi Output (MIMO) or L1L2-triggered mobility (LTM) is applied, for beam reporting triggered by a terminal or an event, what configuration is made or how reporting of a serving beam / candidate beam is performed remains unclear. If this remains unclear, suppression of enhancement in communication quality/throughput may be caused.

In view of this, an object of the present disclosure is to provide a terminal, a radio communication method, and a base station that enable reporting of a serving beam / candidate beam to be appropriately performed.

### Solution to Problem

A terminal according to an aspect of the present disclosure includes: a receiving section that receives, in a case where Multi Input Multi Output (MIMO) is applied, configuration information for Channel State Information (CSI) reporting triggered by the terminal or an event; and a control section that performs, based on the configuration information, CSI reporting of at least one of a serving beam and a candidate beam.

### Advantageous Effects of Invention

An aspect of the present disclosure enables reporting of a serving beam / candidate beam to be appropriately performed.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of comparison of L3 handover and Rel-18 LTM.
[FIG. 3] FIG. 3 is a diagram to show an example of a MAC CE for type 1.
[FIG. 4] FIG. 4 is a diagram to show an example of a MAC CE for type 2 (type 2-1/2-2).
[FIG. 5] FIG. 5 is a diagram to show an example of a MAC CE for beam reporting.
[FIG. 6] FIGS. 6A and 6B are each a diagram to show a differential between a current beam and a measured value.
[FIG. 7] FIG. 7 is a diagram to show an example that configured CMRs for candidate cells/beams are different from that of a serving beam.
[FIG. 8] FIG. 8 is a diagram to show an example that at least one of configured CMRs for candidate cells/beams is the same as that of a serving beam.
[FIG. 9] FIG. 9 is a diagram to show an example of a beam report based on UCI.
[FIG. 10] FIG. 10 is a diagram to show an example of a beam report based on a MAC CE.
[FIG. 11] FIG. 11A is a diagram to show an example of a case that all candidate beams correspond to the same frequency. FIG. 11B is a diagram to show an example of a case that, out of a plurality of candidate beams, some candidate beams correspond to a different frequency.
[FIG. 12] FIG. 12A is a diagram to show a first example of Option 1 according to a third embodiment. FIG. 12B is a diagram to show a second example of Option 1 according to the third embodiment.
[FIG. 13] FIG. 13A is a diagram to show a first example of Option 2 according to the third embodiment. FIG. 13B is a diagram to show a second example of Option 2 according to the third embodiment.
[FIG. 14] FIG. 14 is a diagram to show an example of updating of a serving beam in Options A-1 and B-1 according to the third embodiment.
[FIG. 15] FIG. 15 is a diagram to show an example of updating of a serving beam in Options A-2 and B-2 according to the third embodiment.
[FIG. 16] FIG. 16 is a diagram to show a configuration example of a serving beam according to Aspect 3.3.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (CSI Reporting)

In NR, a UE measures a channel state by using a certain reference signal (or a resource for the reference signal) and feeds back (reports) channel state information (CSI) to a base station.

The UE may measure the channel state by using a channel state information reference signal (CSI-RS), a synchronization signal / broadcast channel (Synchronization Signal / Physical Broadcast Channel (SS/PBCH)) block, a synchronization signal (SS), a demodulation reference signal (DMRS), or the like.

A CSI-RS resource may include at least one of a non-zero power (NZP) CSI-RS and CSI-Interference Management (CSI-IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be provided for a time location of an SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, the CQI), such as information determined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

Information related to CSI reporting (which may be referred to as CSI report configuration information) may be notified to the UE by using higher layer signaling, physical layer signaling (for example, downlink control information (DCI)), or a combination of them. The CSI report configuration information may be configured by using, for example, an RRC information element "CSI-ReportConfig."

For example, the CSI report configuration information may include information related to a report periodicity, an offset, or the like, which may each be represented in a certain time unit (such as slot unit, subframe unit, or symbol unit). The CSI report configuration information may include a configuration ID (CSI-ReportConfigId). A parameter, such as a type of CSI reporting method (such as whether the type is SP-CSI) or the report periodicity, may be identified by the configuration ID. The CSI report configuration information may include information (CSI-ResourceConfigId) indicating which signal (or which signal resource) is used for measured CSI to be reported.

### (Beam Management)

For Rel-15 NR thus far, a beam management (BM) method has been studied. In the beam management, beam selection based on L1-RSRP reported by the UE is under study. Changing (switching) a beam of a certain signal/channel may correspond to changing a (Transmission Configuration Indication state) for the signal/channel.

Note that a beam selected by the beam selection may be a transmit beam (Tx beam) or may be a receive beam (Rx beam). The beam selected by the beam selection may be a UE beam or may be a base station beam.

The UE may report (transmit) a measurement result for the beam management by using a PUCCH or a PUSCH. The measurement result may be, for example, CSI including at least one of L1-RSRP, L1-RSRQ, L1-SINR, L1-SNR, and the like. The measurement result may be referred to as beam measurement, a beam measurement result, a beam report, a beam measurement report, or the like.

CSI measurement for the beam report may include interference measurement. The UE may measure channel quality, interference, and the like by using a CSI measurement resource to derive the beam report. The CSI measurement resource may be, for example, at least one of an SS/PBCH block resource, a CSI-RS resource, another reference signal resource, and the like. Configuration information about a CSI measurement report may be configured for the UE by using higher layer signaling.

The beam report may include a result of at least one of channel quality measurement and interference measurement. The result of the channel quality measurement may include, for example, L1-RSRP. The result of the interference measurement may include L1-SINR, L1-SNR, L1-RSRQ, another interference-related indicator (for example, any indicator other than the L1-RSRP), and the like.

Note that the CSI measurement resource for the beam management may be referred to as a beam measurement resource. A signal/channel as a target for the CSI measurement may be referred to as a beam measurement signal. The CSI measurement/reporting may be interpreted as at least one of measurement/reporting for beam management, beam measurement/reporting, radio link quality measurement/reporting, and the like.

CSI report configuration information with consideration of beam management in existing NR is included in the RRC information element "CSI-ReportConfig." Information in the RRC information element "CSI-ReportConfig" will be described.

The CSI report configuration information (CSI-ReportConfig) may include report quantity information (which may be represented by "report quantity" or an RRC parameter "reportQuantity") that is information about parameters to be reported. The report quantity information is defined by an ASN.1 object type "choice type (choice)." Thus, one of parameters (cri-RSRP, ssb-Index-RSRP, and the like) defined as the report quantity information is configured.

For each report configuration, a UE for which a higher layer parameter (for example, an RRC parameter "groupBasedBeamReporting") included in the CSI report configuration information is set to "enabled" may include, in a beam report, a plurality of beam measurement resource IDs (for example, SSBRIs, CRIs) and a plurality of measurement results (for example, L1-RSRP) corresponding to them.

For each report configuration, a UE for which the number of report target RS resources being one or more is configured by a higher layer parameter (for example, an RRC parameter "nrofReportedRS") included in the CSI report configuration information may include, in a beam report, one or more beam measurement resource IDs and one or more measurement results (for example, L1-RSRP) corresponding to them.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel), based on a transmission configuration indication state (TCI state), is under study.

The TCI state may be a state applied to a downlink signal/channel. A state that corresponds to the TCI state applied to an uplink signal/channel may be expressed as spatial relation.

The TCI state is information related to quasi-co-location (QCL) of a signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

Information about QCL as indicated in QCL types A to D described above may be referred to as QCL property.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-cell Mobility)

Studies are underway that a UE performs UL transmission to one or a plurality of cells/TRPs. As a procedure for such a case, Scenario 1 or Scenario 2 below is conceivable. Note that, in the present disclosure, a serving cell may be interpreted as a TRP in the serving cell. Layer1/layer2 (L1/L2) and DCI / Medium Access Control Control Element (MAC CE) may be interchangeably interpreted. In the present disclosure, a physical cell ID (Physical Cell Identity (PCI)) different from a PCI of a current serving cell may be simply referred to as a "different PCI." A non-serving cell, a cell having a different PCI, and an additional cell may be interchangeably interpreted.

### <Scenario 1>

Scenario 1 corresponds to, for example, multi-TRP inter-cell mobility, but Scenario 1 may be a scenario not corresponding to multi-TRP inter-cell mobility.

In Scenario 1, when a UE transmits or receives a signal to or from an additional cell / TRP (a TRP corresponding to a PCI of the additional cell), a serving cell (serving cell assumption by the UE) is not changed. The UE is, from the serving cell, configured with a higher layer parameter related to a PCI of a non-serving cell. Scenario 1 may be applied in Rel. 17, for example.

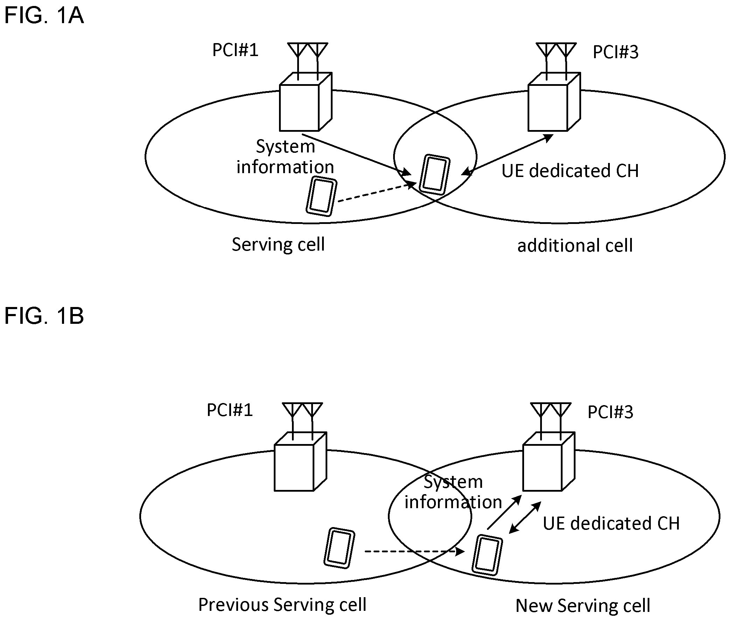

FIG. 1A is a diagram to show an example of movement of a UE in Rel. 17. A case is assumed where the UE moves from a cell (serving cell) of PCI #1 to a cell (additional cell) of PCI #3 (having an overlap with the serving cell). In this case, in Rel. 17, the serving cell is not switched by L1/L2. The additional cell is a cell having a PCI (additional PCI) different from a PCI of the serving cell. The UE can receive/transmit a UE-dedicated channel from/to the additional cell. The UE is required to be in a coverage of the serving cell in order to receive a UE-common channel (for example, system information / paging / short message).

### <Scenario 2>

In Scenario 2, L1/L2 inter-cell mobility is used. In L1/L2 inter-cell mobility, serving cell change is possible to be performed by using a function such as beam control, without RRC reconfiguration. Traditionally, RRC reconnection or the like is required for handover, causing a data communication disabled period. Hence, L1/L2 inter-cell mobility is used, thereby enabling data communication to be continued even in serving cell change. In Scenario 2, a serving cell (serving cell assumption by a UE) is updated by L1/L2 signaling. Scenario 2 may be applied in Rel. 18.

FIG. 1B is a diagram to show an example of movement of a UE in Rel. 18. In Rel. 18, a serving cell is switched by L1/L2. The UE can receive/transmit, from/to a new serving cell (target serving cell), a UE-dedicated channel / common channel. The UE may be out of a coverage of the previous serving cell.

### <Reduction in Interruption Time>

In Rel-18 L1/L2 inter-cell mobility (for example, Scenario 2 described above), a UE can reduce a time without data transmission (interruption time). Note that L1/L2 inter-cell mobility may be interpreted as L1L2 triggered mobility (LTM). In a case where Rel-18 LTM is applied, such a time without data transmission (interruption time) can be reduced, as compared with a case of a method that handover is performed based on an L3 measurement result (L3 handover). Specific processing for each case will be described below.

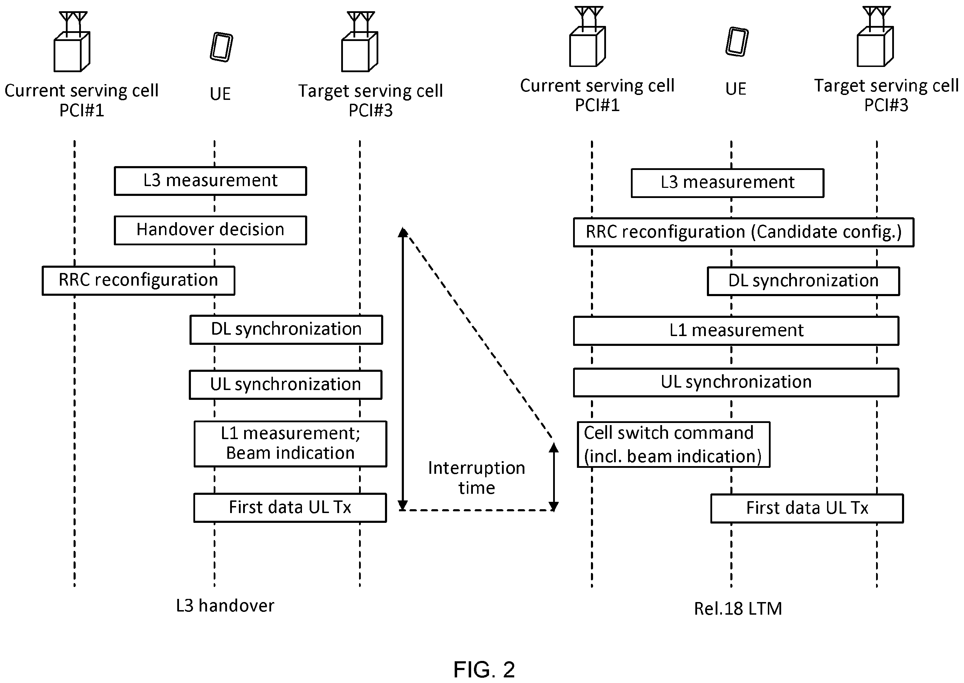

FIG. 2 is a diagram to show an example of comparison of L3 handover and Rel-18 LTM. In the case of L3 handover, first, a UE performs L3 measurement, and decides to perform handover on the basis of the measurement result. Then, the UE and a current serving cell perform RRC reconfiguration. Thereafter, the UE performs DL synchronization and UL synchronization with a target serving cell. The UE performs L1 measurement/reporting with respect to the target serving cell and receives a beam indication, and then transmits first UL data to the target serving cell. In this case, during a period from the handover decision to the first UL data transmission, the UE performs no UL data transmission (interruption time).

In the case of Rel-18 LTM, first, a UE performs L3 measurement. Then, the UE, a current serving cell, and a target serving cell perform RRC reconfiguration. Thereafter, the UE performs DL synchronization with the target serving cell. Then, the UE performs L1 measurement/reporting with respect to the current serving cell and the target serving cell and performs UL synchronization. Subsequently, the current serving cell transmits, to the UE, a cell switch command (including a beam indication) by L1L2 (DCI / MAC CE). Then, the UE transmits first UL data to the target serving cell. In this case, a period from reception of the cell switch command to the first UL data transmission corresponds to the interruption time of UL transmission. The interruption time is shorter than that in the case of L3 handover.

### (Event for L3 Measurement/reporting)

Part of events for radio resource management (RRM) reporting (L3 measurement/reporting) in Rel. 17 will be described below.

Note that, in Events A1 to A6, B1, and B2, a measurement result may be a measurement result of at least one of RSRP (L1-RSRP/L3-RSRP), RSRQ, and SINR (RS-SINR). For a condition in Events A1 to A6, B1, and B2, "bad" and "good" may mean "low" and "high," respectively. For a condition in Events A1 to A6, B1, and B2, an SpCell may mean a special cell. An SpCell may mean at least one of a Primary Cell (PCell) and a Primary Secondary Cell (PSCell). Thresholds may have the same or different values.

### <Event A1>

Event A1 indicates that a serving becomes better than a threshold. Specifically, when Condition A1-1 defined below is satisfied, a UE considers that an entering condition for this event is satisfied. When Condition A1-2 is satisfied, the UE considers that a leaving condition for this event is satisfied.
- Condition A1-1 Ms - Hys > Thresh
- Condition A1-2 Ms + Hys < Thresh

The variables in the expressions in Conditions A1-1 and A1-2 described above are defined as below.
- Ms is a measurement result of a serving cell, not taking into account any offsets.
- Hys is a hysteresis parameter for this event (in other words, a parameter (hysteresis) defined in report configuration information (reportConfigNR) for this event).
- Thresh is a threshold parameter for this event (in other words, a parameter (a1-Threshold) defined in the report configuration information (reportConfigNR) for this event).
- Ms is in a unit of dBm in a case of RSRP or in a unit of dB in a case of RSRQ and RS-SINR.
- Hys is expressed in dB.
- Thresh is in a unit the same as that for Ms.

### <Event A2>

Event A2 indicates that a serving (a measurement result of a serving cell) becomes worse than a threshold. Specifically, when Condition A2-1 defined below is satisfied, a UE considers that an entering condition for this event is satisfied. When Condition A2-2 is satisfied, the UE considers that a leaving condition for this event is satisfied. The meanings of variables in each condition are similar to the variables in A1 described above.
- Condition A2-1 Ms + Hys < Thresh
- Condition A2-2 Ms - Hys > Thresh

### <Event A3>

Event A3 indicates that a neighbour (a measurement result of a neighbour cell) becomes better than an SpCell, taking into account an offset. Specifically, when Condition A3-1 defined below is satisfied, a UE considers that an entering condition for this event is satisfied. When Condition A3-2 is satisfied, the UE considers that a leaving condition for this event is satisfied.

- Condition A3-1 Mn + Ofn + Ocn - Hys > Mp + Ofp + Ocp + Off
- Condition A3-2 Mn + Ofn + Ocn + Hys < Mp + Ofp + Ocp + Off

The variables in the expressions in Conditions A3-1 and A3-2 described above are defined as below.
- Mn is a measurement result of a neighbour cell, not taking into account any offsets.
- Ofn is a measurement object-specific offset of a reference signal of the neighbour cell (in other words, a parameter (offsetMO) defined in configuration information (measObjectNR) corresponding to the neighbour cell).
- Ocn is a cell-specific offset of the neighbour cell (in other words, a parameter (cellIndividualOffset) defined in the configuration information (measObjectNR) corresponding to a frequency of the neighbour cell). Ocn is set equal to zero in a case of not configured for the neighbour cell.
- Mp is a measurement result of an SpCell, not taking into account any offsets.
- Ofp is a measurement object-specific offset of the SpCell (a parameter (offsetMO) defined in the configuration information (measObjectNR) corresponding to the SpCell).
- Ocn is a cell-specific offset of the SpCell (a parameter (cellIndividualOffset) defined in the configuration information (measObjectNR) corresponding to the SpCell). Ocp is set equal to zero in a case of not configured for the SpCell.
- Hys is a hysteresis parameter for this event (in other words, a parameter (hysteresis) defined in configuration information (reportConfigNR) for this event).
- Off is an offset parameter for this event (in other words, a parameter (a3-Offset) defined in the configuration (reportConfigNR) for this event).
- Mn and Mp are each in a unit of dBm for RSRP or in a unit of dB for RSRQ and RS-SINR.
- Ofn, Ocn, Ofp, Ocp, Hys, and Off are each in a unit of dB.

### <Event A4>

Event A4 indicates that a neighbour (a measurement result of a neighbour cell) becomes better than a threshold. Specifically, when Condition A4-1 defined below is satisfied, a UE considers that an entering condition for this event is satisfied. When Condition A4-2 is satisfied, the UE considers that a leaving condition for this event is satisfied. The meanings of variables in each condition are similar to the variables in Event A3 described above.

- Condition A4-1 Mn + Ofn + Ocn - Hys > Thresh
- Condition A4-2 Mn + Ofn + Ocn + Hys < Thresh

### <Event A5>

Event A5 indicates that an SpCell (a measurement result of an SpCell) becomes worse than a threshold 1 and a neighbour (a measurement result of a neighbour cell) becomes better than a threshold 2. Specifically, when both Conditions A5-1 and A5-2 defined below are satisfied, a UE considers that an entering condition for this event is satisfied. When at least one of Condition A5-3 or A5-4 is satisfied, the UE considers that a leaving condition for this event is satisfied. Thresh1 and Thresh2 are each a threshold for this event. Thresh1 is in a unit the same as that for Mp. Thresh2 is in a unit the same as that for Mn. The meanings of the rest of the variables are similar to the variables in Event A3 described above.

- Condition A5-1 Mp + Hys < Thresh1
- Condition A5-2 Mn + Ofn + Ocn - Hys > Thresh2
- Condition A5-3 Mp - Hys > Thresh1
- Condition A5-4 Mn + Ofn + Ocn + Hys < Thresh2

### <Event A6>

Event A6 indicates that a neighbour (a measurement result of a neighbour cell) becomes better than an SCell (a measurement result of an SpCell), taking into account an offset. Specifically, when Condition A6-1 defined below is satisfied, a UE considers that an entering condition for this event is satisfied. When Condition A6-2 is satisfied, the UE considers that a leaving condition for this event is satisfied.

- Condition A6-1 Mn + Ocn - Hys > Ms + Ocs + Off
- Condition A6-2 Mn + Ocn + Hys < Ms + Ocs + Off

For this measurement, a secondary cell (SCell) corresponding to the configuration (measObjectNR) related to this event is considered to be a serving cell. A reference signal of the neighbour cell and a reference signal of the SCell are both indicated in the related configuration (measObjectNR). The variables in the expressions in Conditions A6-1 and A6-2 described above are defined as below. The meanings of the rest of the variables are similar to the variables in Event A3 described above.
- Ms is a measurement result of a serving cell, not taking into account any offsets.
- Ocs is a cell-specific offset of the serving cell (in other words, cellIndividualOffset defined in the related configuration (measObjectNR)). Ocs is set equal to zero in a case of not configured for the serving cell.

### <Event B1>

Event B1 indicates that an inter-Radio Access Technology (RAT) neighbour cell (a measurement result of a neighbour cell) becomes better than a threshold. For example, in a case where a RAT of a serving cell is LTE (or NR/5G), the inter-RAT neighbour cell may be a cell of NR/5G (or LTE). Specifically, when Condition B1-1 defined below is satisfied, a UE considers that an entering condition for this event is satisfied. When Condition B1-2 is satisfied, the UE considers that a leaving condition for this event is satisfied.

- Condition B1-1 Mn + Ofn + Ocn - Hys > Thresh
- Condition B1-2 Mn + Ofn + Ocn + Hys < Thresh

- Mn is a measurement result of an inter-RAT neighbour cell, not taking into account any offsets.
- Ofn is a measurement object-specific offset of a frequency of the inter-RAT neighbour cell (in other words, a parameter (utra-Q-OffsetRange) defined in configuration information (measObjectEUTRA) corresponding to a frequency of a neighbouring inter- inter-RAT cell, a parameter (utra-FDD-Q-OffsetRange) defined in configuration information (measObjectUTRA-FDD) corresponding to a frequency of a neighbouring inter-RAT cell).
- Ocn is a cell-specific offset of the inter-RAT neighbour cell (in other words, a parameter (cellIndividualOffset) defined in the configuration information (measObjectEUTRA) corresponding to a neighbouring inter-RAT cell). Ocn is set equal to zero in a case of not configured for the neighbour cell.
- Hys is a hysteresis parameter for this event (in other words, a parameter (hysteresis) defined in configuration information (reportConfigInterRAT) for this event).
- Thresh denotes a threshold parameter for this event (in other words, a parameter (b1-ThresholdEUTRA) defined in the configuration information (reportConfigInterRAT) for this event or a parameter (b1-ThresholdUTRA-FDD) defined for UTRA-FDD).
- Mn is in a unit of dBm or dB, depending on a measurement quantity of the inter-RAT neighbour cell.
- Ofn, Ocn, and Hys are each in a unit of dB.
- Thresh is in a unit the same as that for Mn.

### <Event B2>

Event B2 indicates that a PCell (a measurement result of a PCell) becomes worse than a threshold 1 and an inter-RAT neighbour cell (a measurement result of a neighbour cell) becomes better than a threshold 2. Specifically, when both Conditions B2-1 and B2-2 defined below are satisfied, a UE considers that an entering condition for this event is satisfied. When at least one of Condition B2-3 or B2-4 is satisfied, the UE considers that a leaving condition for this event is satisfied.

- Condition B2-1 Mp + Hys < Thresh1
- Condition B2-2 Mn + Ofn + Ocn - Hys > Thresh2
- Condition B2-3 Mp - Hys > Thresh1
- Condition B2-4 Mn + Ofn + Ocn + Hys < Thresh2

- Mp is a measurement result of a PCell, not taking into account any offsets.
- Thresh1 and Thresh2 are each a threshold for this event. Thresh1 is in a unit the same as that for Mp. Thresh2 is in a unit the same as that for Mn. The meanings of the rest of the variables are similar to the variables in Event B1 described above.

### <Event T1>

Event T1 indicates that a time measured at a UE is within a certain time from a threshold. Specifically, when Condition T1-1 defined below is satisfied, the UE considers that an entering condition for this event is satisfied. When Condition T1-2 is satisfied, the UE considers that a leaving condition for this event is satisfied.

- Condition T1-1 Mt > Thresh1
- Condition T1-2 Mt > Thresh1 + Duration

The Variables in the expressions are defined as below.
- Mt is a time measured at the UE.
- Thresh1 is a threshold parameter for this event (in other words, a parameter (t1-Threshold) defined in configuration information (reportConfigNR) corresponding to this event).
- Duration is a parameter indicating a period for this event (in other words, a parameter (duration) defined in the configuration information (reportConfigNR) corresponding to this event).
- Mt is in a unit of ms.
- Thresh1 is in a unit the same as that for Mt.
- Duration is in a unit the same as that for Mt.

### <Event I1>

Event I1 indicates that interference becomes higher than a threshold. Specifically, specifically, when Condition I1-1 defined below is satisfied, a UE considers that an entering condition for this event is satisfied. When Condition I1-2 is satisfied, the UE considers that a leaving condition for this event is satisfied.

- Condition I1-1 Mi - Hys > Thresh
- Condition I1-2 Mi + Hys < Thresh

The variables in the expressions in Conditions I1-1 and I1-2 described above are defined as below.
- Mi is a measurement result of interference, not taking into account any offsets.
- Hys is a hysteresis parameter for this event (in other words, a parameter (hysteresis) defined in configuration information (reportConfigNR) for this event).
- Thresh is a threshold parameter for this event (in other words, a parameter (i1-Threshold) defined in the configuration information (reportConfigNR) for this event).
- Mi and Thresh are each in a unit of dBm.
- Hys is in a unit of dB.

### (Beam Reporting Type)

### <Rel-15/16 Intra-cell Beam Reporting>

In Rel. 15/16, intra-cell beam reporting is supported. For example, L1-RSRP/SINR reporting can be configured by using higher layer signaling (RRC).

For example, in L1-RSRP calculation, when a resource is associated with QCL type C/type D, a UE can be configured with a CSI-RS resource, an SS/PBCH block resource, or both.

The UE can be configured with up to 16 CSI-RS resource sets each including up to 64 resources. In all the resource sets, the total number of different CSI-RS resources is no more than 128.

For L1-RSRP reporting, when a higher layer parameter nrofReportedRS (for example, in CSI-ReportConfig) is set equal to 1, an L1-RSRP value to be reported is defined by a 7-bit value in a range [-140 to -44] dBm with a step size of 1 dB.

Here, the largest measured value of L1-RSRP is quantized to a 7-bit value in the range [-140 to -44] dBm with the step size of 1 dB. A differential value of L1-RSRP is quantized to a 4-bit value.

The differential value is calculated with a step size of 2 dB, with reference to the largest measured value being part of the same L1-RSRP reporting instance.

For example, for L1-SINR calculation and channel measurement, a UE can be configured with an NZP CSI-RS resource, an SS/PBCH block resource, or both. For interference measurement, the UE can be configured with an NZP CSI-RS resource or a CSI-IM resource.

For channel measurement, the UE can be configured with a CSI resource setting related to up to 16 CSI-RS resource sets including up to 64 CSI resources or SS/PBCH block resources.

For L1-SINR reporting, when the higher layer parameter nrofReportedRS is set equal to 1, an L1-SINR value to be reported is defined by a 7-bit value in a range [-23 to 40] dBm with a step size of 0.5 dB.

When the higher layer parameter nrofReportedRS is set larger than 1 or a higher layer parameter groupBasedBeamReporting is set as "enabled," the UE uses, for the reporting, an L1-SINR value of differential value based.

The differential value is calculated with the step size of 1 dB, with reference to the largest measured value being part of the same L1-SINR reporting instance.

In the present disclosure, Rel-15/16 intra-cell beam reporting (which may be simply referred to as intra-cell beam reporting) may be referred to as type 1 beam reporting (beam reporting type 1) or beam reporting for intra-cell beam switching.

### <Rel-17 Inter-cell Beam Reporting>

As described above, in Rel. 17, L1/L2 inter-cell mobility is supported. For example, it is possible for a UE to transmit and receive a UL/DL channel/signal to and from a PCI for a cell different from a PCI for a serving cell. For example, in a case where a non-serving cell has RSRP larger than that of the serving cell, it is possible for the UE to transmit and receive a UL/DL channel/signal to and from the non-serving cell without handover.

For L1-RSRP reporting, similarly to Rel. 15/16, an absolute value / differential value of L1-RSRP may be used. In Rel-17 inter-cell beam reporting (type 2-1 beam reporting to be described below), L1-RSRP values are associated with PCI IDs (corresponding to serving cell / additional cell / candidate cell). Such association between L1-RSRP values and PCI IDs may be configured/indicated by using higher layer signaling / physical layer signaling.

Such configuration by higher layer signaling supports seven additional cells at maximum. Note that ID = 0 means the PCI of the serving cell.

In the present disclosure, inter-cell beam reporting (in Rel. 17/18) may be referred to as type 2 beam reporting (beam reporting type 2). Such type 2 beam reporting can be further classified into types 2-1 and 2-2 to be described below.

In the present disclosure, Rel-17 beam reporting may be referred to as type 2-1 beam reporting or beam reporting for inter-cell beam switching.

### <Rel-18 Inter-cell Beam Reporting>

For Rel-18 beam reporting, only SSB-based L1-RSRP reporting (beam reporting) is supported. Here, the number L of candidate cells may be any one of 1 to 4 and the number M of beams per cell may be any one of 1 to 4. For example, in beam reporting, a 7-bit absolute value (the largest L1-RSRP value in all the cells) is reported for one cell, and the rest of all the L1-RSRP values are reported as differential values.

Regarding beam selection in SSB-based L1-RSRP reporting, with respect to M and L described above, the maximum value of M * L configurable by RRC and a combination of M and L may depend on UE capabilities.

For L1-RSRP reporting, similarly to Rel. 15/16/17, an absolute value / differential value of L1-RSRP may be used.

For L1-RSRP reporting, an L1-RSRP value to be reported is defined by a 7-bit value in the range [-140 to -44] dBm with the step size of 1 dB.

Here, the largest measured value of L1-RSRP is quantized to a 7-bit value in the range [-140 to -44] dBm with the step size of 1 dB. A differential value of L1-RSRP is quantized to a 4-bit value.

The differential value is calculated with the step size of 2 dB, with reference to the largest measured value being part of the same L1-RSRP reporting instance.

In L1-RSRP reporting, SSBRIs between candidate cells configured are included. In other words, in L1-RSRP reporting, L1-RSRP corresponding to SSBRIs of candidate cells configured is included. A format may be the same as that in any existing specification.

In the present disclosure, Rel-18 beam reporting may be referred to as type 2-2 beam reporting or beam reporting for cell switching. Note that, in type 2-2 beam reporting, no PCI related information (PCI ID) is included. Instead of this, PCI related information may be included in an SSBRI. For example, in a case where four cells has 64 SSBs, each SSBRI is any one of {0, 1, ..., 255}.

### (MAC CE For Beam Reporting)

An example of a new MAC CE for beam reporting will be described below.

### [Option 1]

A MAC CE may be defined for each beam reporting type (type 1 indicating intra-cell beam reporting and type 2 indicating inter-cell beam reporting).

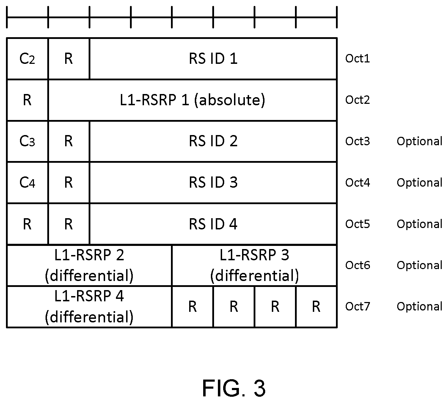

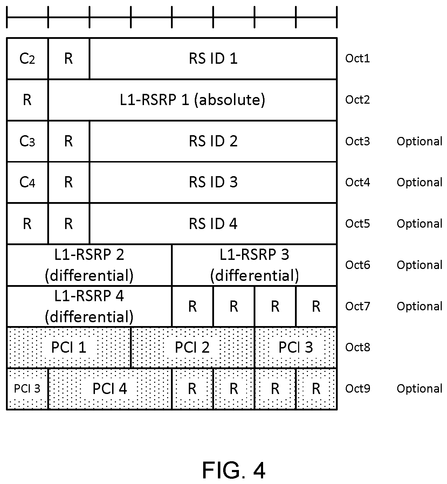

For example, FIG. 3 shows an example of a MAC CE for type 1 and FIG. 4 shows an example of a MAC CE for type 2 (type 2-1/2-2). The MAC CE in FIG. 3 and the MAC CE in FIG. 4 may have different Logical Channel IDs (LCIDs).

As shown in FIG. 3, the MAC CE for type 1 may include fields indicating second to fourth measurement results and presence of an RS ("Cᵢ" fields (i = 2, 3, 4)), fields indicating RS IDs corresponding to top four beams ("RS ID i" fields (i = 1, 2, 3, 4)), fields indicating measurement results ("L1-RSRP i" fields (i = 2, 3, 4)), and reserved fields ("R" fields).

The fields indicating RS IDs may each have 6 bits in a case of only SSBRI, or have 7 bits in a case of SSBRI/CRI.

Note that, in a diagram showing an example of a MAC CE in the present disclosure, an example is shown that a measurement result is indicated with L1-RSRP, but this is merely an example and an indicator for the measurement result is not limited to this.

In the MAC CE, a field corresponding to a measurement result of the best (top one) beam may be defined in a first number of bits (for example, 7 bits). In this case, the field may indicate an absolute value of the measurement result.

In the MAC CE, fields corresponding to measurement results of beams other than the best beam (for example, measurement results of second to fourth beams) may each be defined in a second number of bits (for example, 4 bits). In this case, the fields may each indicate a relative value / differential value with respect to the measurement result of the best beam.

In the MAC CE, the fields corresponding to the measurement results of beams other than the best beam (for example, the measurement results of the second to fourth beams) may each be defined in the first number of bits (for example, 7 bits). In this case, the fields may each indicate an absolute value of the measurement result.

In the MAC CE, the "Cᵢ" fields may each be expressed in 1 bit. In a case where the "Cᵢ" field indicates a first value (for example, 0), this may indicate that no reporting is to be performed for the corresponding beam. In a case where the "Cᵢ" field indicates a second value (for example, 1), this may indicate that reporting is to be performed for the corresponding beam.

For example, in a case where the "C₂" field, the "C₃" field, and the "C₄" field each indicate 1, reporting of a measurement result of the second beam and an RS ID, a measurement result of the third beam and an RS ID, and a measurement result of the fourth beam and an RS ID may be made in the MAC CE. In other words, only in the case where the "C₂" field, the "C₃" field, and the "C₄" field each indicate 1, fields corresponding to the second to fourth beams (RSRP/PCI) may be present.

In FIG. 3, fields of octets 3 to 7 may be optional.

The MAC CE for type 2 shown in FIG. 4 is obtained by adding 16 bits corresponding to octets 8 to 9 to the MAC CE for type 1 in FIG. 3.

The added fields may include fields indicating PCIs of serving cell / additional cell / candidate cell ("PCI i" fields (for example, i = 1, 2, 3, 4)) and reserved fields ("R" fields). The fields indicating PCIs may each have 3 bits, for example.

The added fields (with using the reserved fields) allows PCIs of up to seven additional cells to be indicated in addition to a PCI of one serving cell. The size of each field is possible to be changed as appropriate. The size of each field may be configured by RRC, predefined in a specification, or determined according to UE capabilities.

For example, each field indicating the RS ID (RS ID field) may have a size that is increased or decreased depending on whether any field indicating a PCI (PCI field) is included. For example, in a case where no field indicating a PCI is included (for example, type 2-1), the RS ID field may be increased/extended in size (for example, 2 bits). In other words, the size of the PCI field may be variable depending of beam reporting types.

### {Current Beam Reporting}

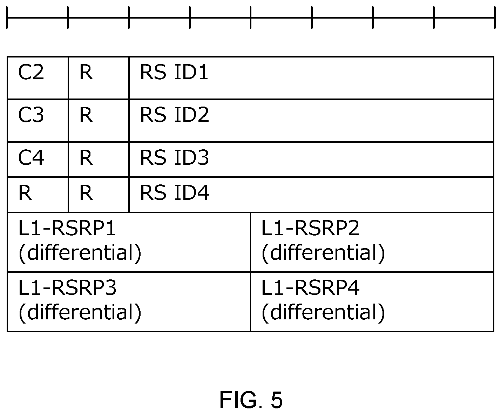

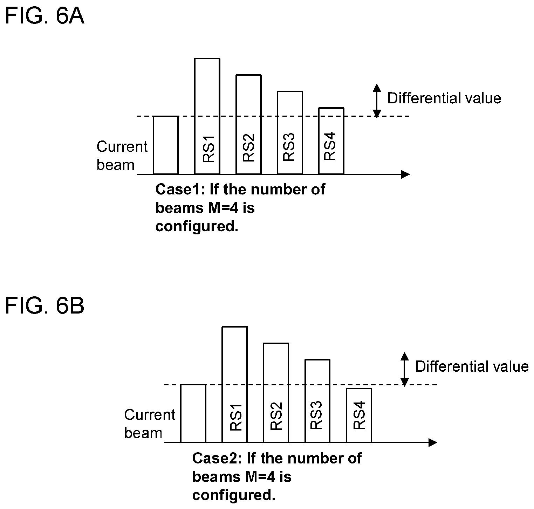

Current beam reporting will be described. FIG. 5 is a diagram to show an example of a MAC CE for beam reporting. FIGS. 6A and 6B are each a diagram to show a differential between a current beam and a measured value.

In beam reporting based on an event, a UE transmits a beam report only when a specific event occurs. In this case, a beam to be reported is assumed to be a beam better than a current beam.

Thus, a beam to be reported is possible to be reported as a differential value with respect to a current beam (based on the current beam). This allows information amount (the number of bits) for reporting to be reduced, allowing overhead of the MAC CE to be economized. Here, the differential value is to be a positive value all the time with respect to the current beam.

The MAC CE shown in FIG. 5 may include fields indicating second to fourth measurement results and presence of an RS ("Cᵢ" fields (i = 2, 3, 4)), fields indicating RS IDs corresponding to top four beams ("RS ID i" fields (i = 1, 2, 3, 4)), fields indicating measurement results ("L1-RSRP i" fields (i = 1, 2, 3, 4)), and reserved fields ("R" fields).

In the MAC CE, a field corresponding to a measurement result of a beam may indicate a relative value / differential value with respect to a measurement result of a current beam. In this case, a measured value (absolute value) of the current beam may not be included. Only the differential value is to be reported, and thus communication overhead of the MAC CE can be reduced.

Assumes that a beam to be reported is a beam better than a current beam, differential values of RS1 to RS4 with respect to the current beam may be reported in positive values, as shown in FIG. 6A.

In contrast, as shown in FIG. 6B, in a case where a certain beam is not better than a current beam (for example, RS4), the differential value of RS4 may or may not be reported.

For example, in a case where reporting is made using the MAC CE, the field size is variable. Thus, even when a UE is configured to report four beams, a negative differential value (the differential value of RS4) may not be reported (may not be included in targets for reporting).

Meanwhile, in a case where reporting is made using UCI (a case of beam reporting based on UCI), the payload is fixed. Thus, a UE is required to report a negative differential value (the differential value of RS4).

### <Variation>

Whether to add an absolute value of L1-RSRP with respect to a current beam may be configured/indicated by using higher layer signaling / physical layer signaling, predefined in a specification, or determined according to reporting of a UE capability. For example, in a case of reporting a UE capability, a UE may add a new field to the MAC CE / UCI for the reporting.

### <Further Variation>

Whether to report an absolute value with respect to a current beam may be judged based on a certain threshold. For example, only when an absolute value with respect to a current beam is smaller/larger than X dB, a UE may report the absolute value. In this case, X may be configured/indicated by using higher layer signaling / physical layer signaling, predefined in a specification, or determined according to reporting of a UE capability. Note that a case where a gNB wants to know such an absolute value of the current beam includes a case where the absolute value is very small (equivalent to a case of almost failure).

### (Indicated TCI State / Configured TCI State)

For an Rel-17 TCI state, a unified/common TCI state may mean an Rel-17 TCI state indicated by using DCI / MAC CE / RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

An indicated Rel-17 TCI state may be shared with at least one of UE-dedicated reception on a PDSCH/PDCC (updated by using DCI / MAC CE / RRC of Rel. 17), a dynamic grant (DCI) / configured grant PUSCH, and a plurality of (for example, all) dedicated PUCCH resources. A TCI state indicated by using DCI / MAC CE / RRC may be referred to as an indicated TCI state or a unified TCI state.

For an Rel-17 TCI state, a TCI state other than a unified TCI state may mean an Rel-17 TCI state configured by using a MAC CE / RRC (of Rel. 17) (configured Rel-17 TCI state). In the present disclosure, a configured Rel-17 TCI state, a configured TCI state, a TCI state other than a unified TCI state, and a TCI state applied to a specific type of signal (channel/RS) may be interchangeably interpreted.

A configured Rel-17 TCI state may not be shared with at least one of UE-dedicated reception on a PDSCH/PDCC (updated by using DCI / MAC CE / RRC of Rel. 17), a dynamic grant (DCI) / configured grant PUSCH, and a plurality of (for example, all) dedicated PUCCH resources. A configured Rel-17 TCI state may be configured, by using RRC / MAC CE, for each CORESET / each resource / each resource set, and may have a configuration that the configured Rel-17 TCI state is not updated even when the above-described indicated Rel-17 TCI state (common TCI state) is updated.

### (Beam Management/reporting Function Extension)

Assuming a unified TCI, targeting FR2 and a single TRP with intra-cell and inter-cell beam management, function extension to ease UE-initiated/event-initiated beam management is under study, in order to reduce overhead/latency.

For example, it is preferable to study a UL signaling content/procedure for UE-initiated/event-initiated beam reporting to ease high-speed beam switching. Further, it is preferable to study a UL signal medium/container that is designed mainly for the purpose of beam reporting, taking account of a UE-initiated/event-initiated property of UL transmission.

### <Multi Input Multi Output (MIMO) UE/event-triggered Beam Reporting>

A candidate beam or a beam of a candidate cell is compared with a current serving beam (one beam). For example, in a case where a configured event condition (for example, quality is higher/lower than a threshold) is satisfied, a report is triggered. The candidate cell/beam is in a frequency the same as that of the current serving cell/beam.

In a case where intra-cell beam management is applied, the candidate beam corresponds to the serving cell (the same PCI). In a case where inter-cell beam management is applied, the candidate beam may possibly correspond to either the serving cell or a candidate cell having a different PCI (the same frequency).

### <L1L2-triggered Mobility (LTM) UE/event-triggered Beam Reporting>

A candidate beam or a beam of a candidate cell is compared with a current serving beam (one / a plurality of beam(s) from a serving cell). For example, in a case where a configured event condition (for example, quality is higher/lower than a threshold) is satisfied, a report is triggered. The candidate cell/beam may be in a frequency different from that of the current serving cell/beam. A configured event / threshold / other parameters may be different between a case of MIMO and a case of LTM. In a case of LTM, the candidate beam may correspond to a candidate cell of a different PCI (same or different frequency(ies)).

### (Analysis)

For future radio communication systems (for example, NR), from the point of view of overhead/latency reduction, beam reporting triggered by a UE or an event is under study.

However, in a case where MIMO or LTM is applied, for beam reporting triggered by a terminal or an event, what configuration is made or how reporting of a serving beam / candidate beam is performed remains unclear. If this remains unclear, suppression of enhancement in communication quality/throughput may be caused.

In view of this, the inventors of the present invention came up with the idea of a radio communication method that enables reporting of a serving beam / candidate beam to be appropriately performed.

Embodiments according to the present disclosure will be described in detail with reference to the drawings as follows. The radio communication methods according to respective embodiments may each be employed individually, or may be employed in combination.

### (Various Interpretations)

In the present disclosure, a wording in "()" in a sentence may indicate a description of the immediately preceding wording (for example, a description of the spelling), rewording, a specific example, a supplementary explanation, or the like. In the present disclosure, regarding a wording in "[]" in a sentence, meaning of the entire sentence may be interpreted including such a wording, or meaning of the entire sentence may be interpreted without including (by ignoring) the wording. Note that "()" and "[]" may be used for a purpose/meaning other than these.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a cell, a PCI, a serving cell, a source serving cell, a source cell, a CC, a BWP, a BWP in a CC, and a band may be interchangeably interpreted. In the present disclosure, a cell, a PCI, a target configured ID, a target cell, an additional PCI cell, an additional cell, another cell, a non-serving cell, a cell having a different PCI, a candidate cell, a candidate cell ID, a candidate serving cell, a cell having a PCI different from a PCI of a current serving cell, and another serving cell may be interchangeably interpreted. The target cell may be a cell selected from among a plurality of candidate cells.

In the present disclosure, a beam, a CMR, an RS (for example, CSI-RS/SSB), an RS index, and an RS resource / resource set may be interchangeably interpreted. Reporting, transmission, and transmission of a CSI report may be interchangeably interpreted.

In the present disclosure, beam reporting based on an event, event-based beam reporting, event-triggered beam reporting, event-driven beam reporting, beam reporting triggered by a UE (UE-triggered beam reporting), and beam reporting initiated by a UE (UE-initiated beam reporting) may be interchangeably interpreted. An event in the present disclosure may be at least one of or any combination of Events A1 to A6, B1, B2, T1, and I1 described above.

In the present disclosure, quality, L1-RSRP, and L1-SINR may be interchangeably interpreted. Contents of reporting (beam reporting) in the present disclosure may include L1-RSRP/L1-SINR, for example.

MIMO and LTM in the present disclosure may be MIMO and LTM of Rel. 19, for example. Beam reporting and CSI reporting may be interchangeably interpreted. A serving cell and a serving beam may be interchangeably interpreted. A candidate cell and a candidate beam may be interchangeably interpreted.

### (Radio Communication Method)

Embodiments in the present disclosure may be premised on <MIMO UE/event-triggered Beam Reporting> described above. For example, in a case where Multi Input Multi Output (MIMO) is applied, a UE may receive configuration information for beam reporting (CSI reporting) triggered by the UE/event and perform, based on the configuration information, beam reporting of a serving beam / candidate beam.

Alternatively, embodiments in the present disclosure may be premised on <LTM UE/event-triggered Beam Reporting>. For example, in a case where L1L2-triggered mobility (LTM) is applied, a UE may receive information related to configuration for beam reporting (CSI reporting) triggered by the UE/event and perform, based on the configuration information, beam reporting of a serving beam / candidate beam.

### <First Embodiment>

A UE may receive a CSI report configuration (CSI-ReportConfig) for beam reporting triggered by the UE/event. Then, based on a TCI state (for example, joint/DL TCI state) indicated, the UE may (implicitly) determine a serving beam (one beam/RS) for measurement and perform CSI reporting of the serving beam determined. The TCI state (for example, joint/DL TCI state) indicated may be, for example, an indicated Rel-17 TCI state (indicated TCI state) described above. Performing CSI reporting may mean transmitting a CSI report to an NW.

The UE may receive a CMR configuration in the CSI report configuration by using RRC signaling. The CMR configuration may include a CMR configuration for a candidate cell/beam. The UE may compare a CMR measurement result based on the CMR configuration for the candidate cell/beam with a CMR measurement result of the serving cell/beam. The number of CMRs (for example, X1) to be configured for the candidate beam is configured by using RRC signaling.

Note that the serving beam implicitly determined by the UE may or may not be included in the CMR configuration (explicit configuration). The CMRs to be configured are based on implementation of the NW, and thus the serving beam may or may not be indicated in the CMR configuration on the basis of the serving beam dynamically changed according to the joint/DL TCI state indicated.

Note that the first embodiment may be applied to both MIMO (for example, Rel. 19) and LTM/mobility (for example, Rel. 19).

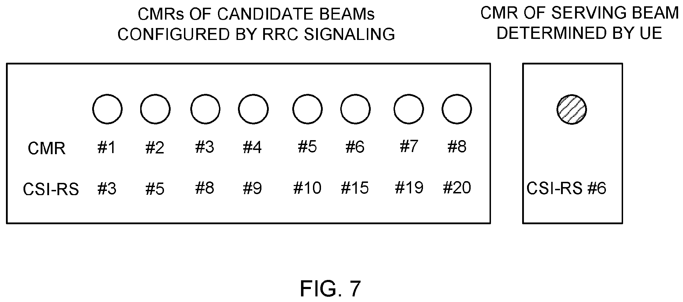

In a case where CMRs configured for candidate cells/beams are different from that of a serving beam implicitly determined by a UE (for example, a case where a QCL source RS of a joint/DL TCI state indicated is different from one of the CMRs configured) (FIG. 7), the UE may compare a CMR measurement result of the candidate beams with a CMR measurement result of the serving beam.

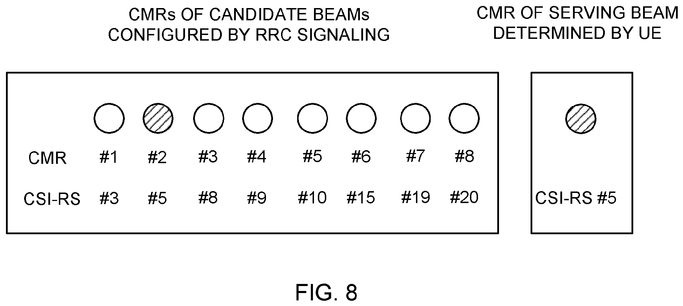

In a case where at least one of CMRs configured for candidate cells/beams is the same as that of a serving beam implicitly determined by a UE (for example, a case where a QCL source RS of a joint/DL TCI state indicated is the same as one of the CMRs configured) (FIG. 8), the UE may ignore such one of the CMRs configured in comparison of a measurement result of the candidate beams and a measurement result of the serving beam.

The UE may transmit, as UE capability information, the maximum number of CMRs to be configured for at least one of a candidate beam, a candidate cell having a PCI different from that of a serving cell, and a candidate cell having a frequency different from that of a serving cell. The UE may receive a configuration of the maximum number of CMRs according to the UE capability information.

After beam reporting/management triggered by the UE/event is performed, in a case where a target serving beam reported by the UE is updated (applied) to a new serving beam (for example, a case where the NW transmits any ACK information in order to confirm beam switch request or cell switch request by the UE), the UE may apply/update, as a new serving beam, the serving beam implicitly determined by the UE for the CSI report configuration for beam reporting triggered by the UE/event. This eases beam reporting triggered by the UE/event thereafter.

According to the first embodiment, a UE (implicitly) determines a serving beam for measurement on the basis of a TCI state indicated, and thus overhead of signaling for serving configuration for measurement can be suppressed.

### <Second Embodiment>

A configuration of the present embodiment may include the CMR configuration in the first embodiment. Note that contents of reporting (beam reporting) in the present disclosure may include L1-RSRP/L1-SINR, for example.

### <<Reporting of Serving Beam>>

A UE may receive a CSI report configuration (CSI-ReportConfig) for beam reporting of a serving beam (one beam). Regarding reporting related to the serving beam of the UE, at least one of the following options may be applied.

Option 1: The UE may report quality of the serving beam all the time. Note that, the UE may not report an RS index of the serving beam.
Option 2: The UE may not report quality of the serving beam all the time. The UE may not report an RS index corresponding to the serving beam.
Option 3: The UE may receive configuration information indicating whether to report quality of the serving beam and, based on the configuration information, determine whether to report quality of the serving beam. The UE may not report an RS index of the serving beam.
Option 4: The UE may (explicitly) report an RS index of the serving beam. Alternatively, a field of 1 bit may be used for indication of the serving beam (for example, in a case of reporting with a MAC CE).

### <<Reporting of Candidate Cell/Beam>>

A UE may receive a configuration (for example, CSI report configuration) for reporting of a candidate cell/beam (one beam). Regarding reporting related to the candidate cell/beam of the UE, at least one of the following options may be applied.

Option A: The number of candidate beams to be reported is defined in advance in a specification and is 1, for example.
Option B: The UE may receive, from an NW, by using higher layer signaling / physical layer signaling, a configuration of the number "N" of candidate beams to be reported. In this case, the UE may select N candidate beams and report, to the NW, measurement results of the candidate beams selected.
Option C: The UE may receive, from an NW, by using higher layer signaling / physical layer signaling, a configuration of the number "N" of candidate beams to be reported. In this case, the UE may select one to N candidate beam(s) and report, to the NW, measurement result(s) of the candidate beam(s) selected. The number of candidate beams to be actually reported may be determined by the UE and indicated to the NW by using an explicit report field or an implicit indication.
Option D: The UE may receive, from an NW, a configuration of another parameter or limitation by using higher layer signaling / physical layer signaling, or such a configuration may be defined in a specification or reported as UE capability information. Examples of such a configuration include the maximum number of candidate cells to be selected, the maximum number of frequencies to be selected, the maximum number of beams to be selected per cell/frequency, and the like. The UE may determine, based on the configuration, the number of candidate beams to be selected/reported.

The UE may select a candidate beam the best in quality, candidate beams of top M in quality, or a candidate beam with quality higher than that of a serving beam. The UE may report an RS index of the candidate beam(s) selected (for example, CMR reindexing index to be described later below).

### <<Contents of Reporting of Serving Cell/beam and Candidate Cell/beam>>

A UE may transmit a beam report (CSI report) including a measurement result of a serving beam and a measurement result of a candidate beam. The beam report may include a measurement result of the best beam out of the beams (for example, 7 bits) and a differential value with respect to the measurement result of the best beam (for example, 4 bits). Regarding contents of reporting of the serving cell/beam and the candidate cell/beam (quantization method), at least one of the following options may be applied. For example, different options may be applied depending on events.

Option a: A measurement result (for example, RSRP/SINR) of a serving beam to be reported may be quantized to 7 bits. In a case where the UE reports measurement results of a plurality of candidate beams, the largest measurement result of the candidate beams may be quantized to 7 bits and the other measurement results may each be differentially quantized to 4 bits.
Option b: The largest measurement result of the candidate beams is quantized to 7 bits, and the other measurement results of the candidate beams and the measurement result of the serving beam are each differentially quantized to 4 bits. Note that a reason why the measurement result of the serving beam is differentially quantized to 4 bits is that the candidate beams are typically better than the serving beam when reporting is triggered.

In a report container based on UCI / MAC CE, in a case where mapping is made for the order of a serving beam and a candidate beam and where no RS index of the serving beam is reported, a location of the measurement result of the serving beam may be fixed.

For example, in a report, a measurement result / RS ID of a serving beam may be provided before measurement results / RS IDs of all candidate beams, may be provided immediately after the best measurement result / RS ID of the candidate beams, or may be provided after the measurement results / RS IDs of all the candidate beams.

For a beam report according to the present embodiment, a format similar to the MAC CE in FIG. 3 or 4 may be used. For example, the RS ID / L1-RSRP in FIG. 3 or 4 may be an RS ID / L1-RSRP corresponding to a serving beam or candidate beam.

### <<Specific Example>>

A specific example of a beam report according to the present embodiment will be described.

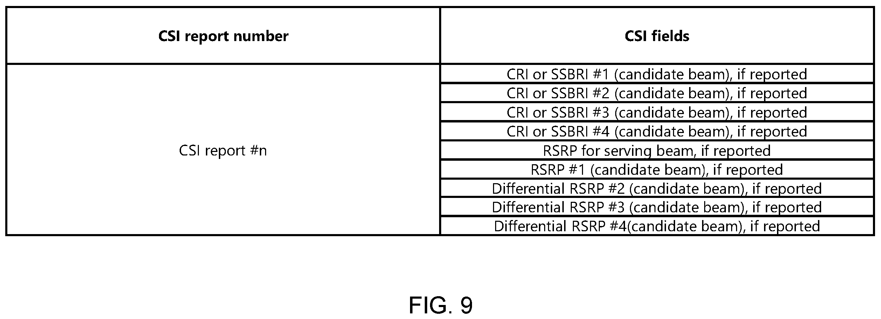

FIG. 9 is a diagram to show an example of a beam report based on UCI. FIG. 9 is applied to a case that up to four (N = 4) candidate beams are configured for beam reporting and one serving beam is configured for the reporting. In a case of the example in FIG. 9, no ID of the serving beam may be included in the report.

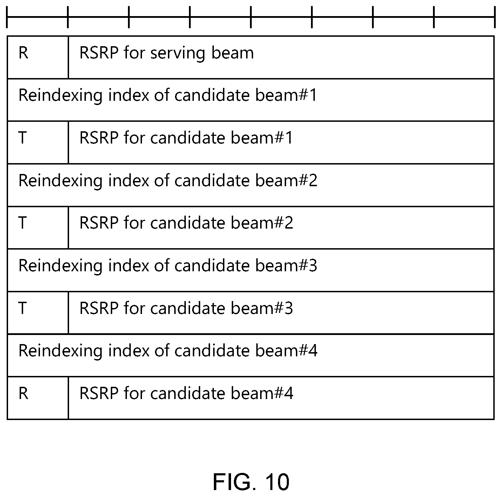

FIG. 10 is a diagram to show an example of a beam report based on a MAC CE. FIG. 10 is applied to a case that up to four (N = 4) candidate beams are configured for beam reporting and one serving beam is configured for the reporting. T in FIG. 10 may indicate whether a next octet (entry) for a candidate beam is present. A reindexing index is described later below.

In the second embodiment, different examples/options may be applied depending on configurations or the like below. Note that MIMO/LTM may be MIMO/LTM of Rel. 19, for example.
- MIMO or LTM
- intra-cell or inter-cell in a case where MIMO is applied
- intra-cell or inter-cell in a case where LTM is applied
- an event to be applied (for example, Event A2, A3, A4, A5, or the like described above)
- UCI-based reporting or MAC CE-based reporting

### <<Reindexing Index>>

It is assumed that the number of CMRs configured corresponding to a candidate beam is X. In a case where a UE discovers that a determined serving beam is included in the configured CMRs, for a reindexing index to be reported regarding the CMRs of the candidate beam, at least one of the following options may be applied.

Option 1: The number of bits of the reindexing index is ceil(log₂(X)) bits.
Option 2: The number of bits of the reindexing index is ceil(log₂(X - 1)) bits. In this case, the UE does not include, in the reindexing index and report, a CMR the same as that of the serving beam. This allows the bit size to be reduced.

The reindexing index may be an index newly created by extracting part of an index (RS ID) of a CMR. Using the reindexing index allows the number of bits to be reduced, as compared with a case of using an index (RS ID) of a CMR.

### <<Frequencies of Serving Beam and Candidate Beam>>

In Rel-19 LTM, different frequencies are possibly applied to a serving cell/beam and candidate cells/beams. In the following cases (1) and (2), a UE can be configured with (determine) the respective different offsets/thresholds.

(1) A case that the serving beam and candidate beams are in the same frequency.
(2) A case that at least one of the serving beam and candidate beams is in a different frequency. Note that, in a case where the serving beam and candidate beams are in different frequencies, one offset value is used. Alternatively, for frequencies of the candidate cells, one offset value may be configured.

In a case where a specific condition is satisfied (for example, a case where L1-RSRP measurement is configured), the UE can be configured with (determine) the respective different offsets/thresholds for the cases (1) and (2).

For different cells/CCs (different frequencies), different transmit powers are possibly used. Thus, in a case where different offsets are not applied, the UE may select a candidate beam on a CC with the largest transmit power all the time.

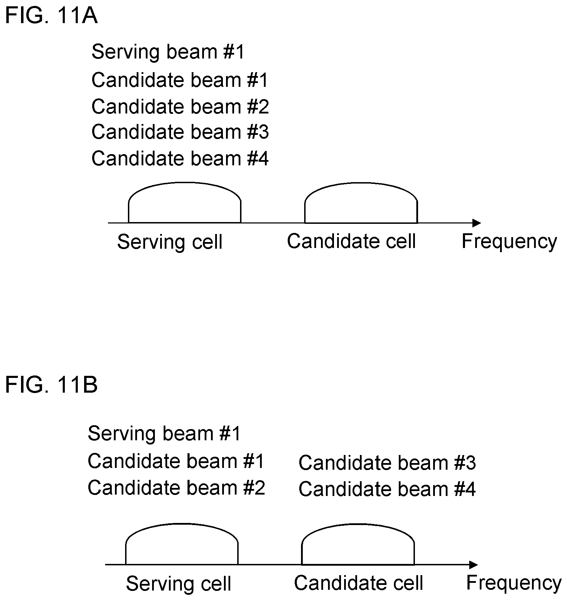

FIG. 11A is a diagram to show an example of a case that all candidate beams correspond to the same frequency. FIG. 11A corresponds to the (1) case that a serving beam and candidate beams are in the same frequency. The frequency may be a frequency of a serving cell.

FIG. 11B is a diagram to show an example of a case that, out of a plurality of candidate beams, some candidate beams correspond to a different frequency. FIG. 11B corresponds to the (2) case that at least one of a serving beam and candidate beams is in a different frequency. The serving beam and part of the candidate beams may correspond to a first frequency (serving cell) and the other ones of the candidate beams may correspond to a second frequency (candidate cell). In FIG. 11B, in event check, an offset value may be added for candidate beams #3 and #4.

A UE may generate/transmit one beam report with respect to one frequency (cell). For example, in the case of FIG. 11A, one beam report including the serving beam and candidate beams may be generated/transmitted. For example, in the case of FIG. 11B, a beam report for the serving cell and a beam report for the candidate cell may each be generated/transmitted.

The present embodiment enables a UE to appropriately perform reporting of a serving beam / candidate beam.

### <Third Embodiment>

### {Aspect 3.1}

A UE may receive a CSI report configuration (CSI-ReportConfig) for beam reporting triggered by the UE/event.

A CMR configuration in the CSI report configuration may be transmitted by using RRC signaling and include a CMR configuration for a candidate cell/beam. The UE may compare a CMR measurement result based on the CMR configuration for the candidate cell/beam with a CMR measurement result of a serving cell/beam. The number of CMRs (for example, X1) to be configured for the candidate beam is configured by using RRC signaling.

Option 1: In the CMR configuration, a CMR (CMR index) of the candidate beam and a CMR (CMR index) of the serving beam may be included in separate lists. The UE may transmit a beam report corresponding to the CMR for each list, for example.

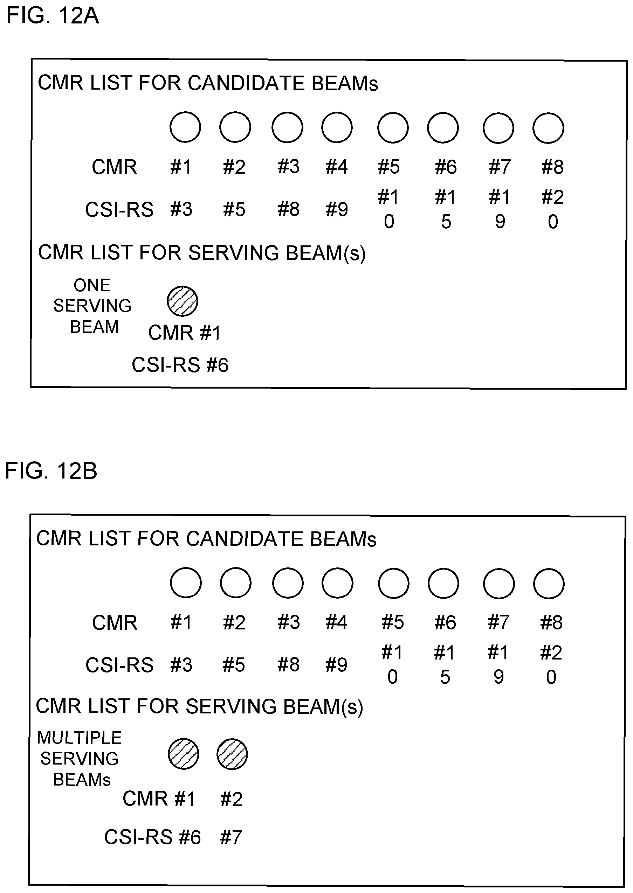

FIG. 12A is a diagram to show a first example of Option 1 according to the third embodiment. In FIG. 12A, a CMR list for candidate beams (CMRs #1 to #8) and a CMR list for serving beam(s) including one serving beam CMR (CMR #1) are shown.

FIG. 12B is a diagram to show a second example of Option 1 according to the third embodiment. In FIG. 12B, a CMR list for candidate beams (CMRs #1 to #8) and a CMR list for serving beam(s) including a plurality of serving beam CMRs (CMRs #1 and #2) are shown.

Option 2: In the CMR configuration, a CMR (CMR index) of the candidate beam and a CMR (CMR index) of the serving beam may be included in one list.

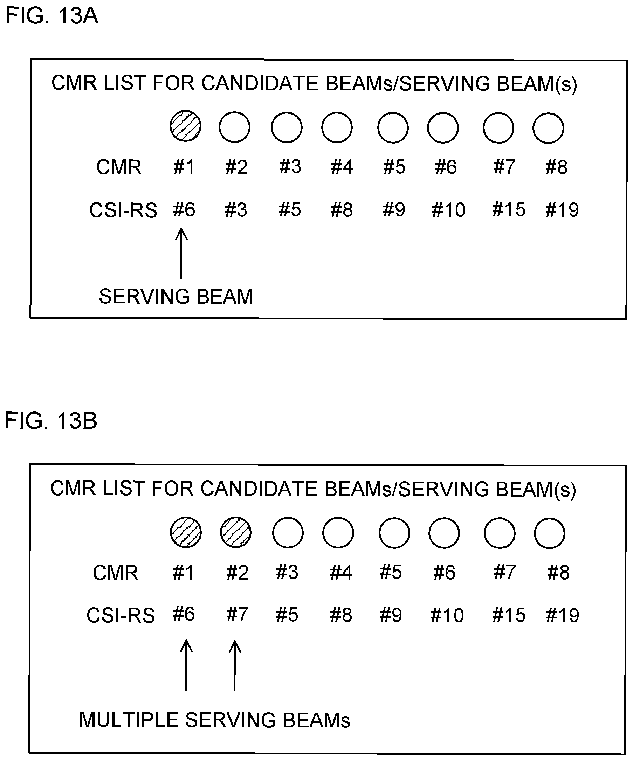

FIG. 13A is a diagram to show a first example of Option 2 according to the third embodiment. In FIG. 13A, a CMR list including CMRs for candidate beams (CMRs #2 to #8) and a CMR for one serving beam (CMR #1) is shown.

FIG. 13B is a diagram to show a second example of Option 2 according to the third embodiment. In FIG. 13B, a CMR list including CMRs for candidate beams (CMRs #3 to #8) and CMRs for a plurality of serving beams (CMRs #1 and #2) is shown.

The number of serving beams to be configured may be defined in a specification, or may be configured for a UE by using higher layer signaling / physical layer signaling, as a parameter such as the number per CMR resource or flag.

The number of serving beams to be reported may be defined in a specification, or may be configured for a UE by using higher layer signaling / physical layer signaling.

In a case of Rel-19 MIMO, the number of serving beam configurations/reports may be one. In a case of Rel-19 LTM, it is preferable that the number of serving beam configurations/reports be one, but a plurality of serving beam configurations/reports may be applied (for example, in a case where filtered multi-beam quality is used for comparison).

### {Aspect 3.2}

A serving beam is possibly changed dynamically according to a TCI state indicated (for example, joint/DL TCI state) or a beam/cell switch procedure triggered by a UE/event. Thus, only configuration information (CSI report configuration (CSI-ReportConfig)) for serving cell/beam reporting received by using RRC signaling may be not sufficient. Thus, in the third embodiment, at least one of the following options may be applied.

### <<Option A>>

In order for comparison of a serving beam and a candidate beam, a UE may receive a MAC CE /DCI to update a configuration of the serving cell/beam in a CSI report configuration (CSI-ReportConfig) for beam reporting triggered by the UE/event. In other words, the CSI report configuration of the serving cell/beam by using RRC signaling may be dynamically updated with the MAC CE / DCI.

Option A-1: A serving beam in a CMR list configured by using RRC signaling (for example, CSI report configuration) may be updated based on a new SSB/CSI-RS resource index configured/indicated with the MAC CE /DCI.
Option A-2: One or a plurality of CMRs in a CMR list configured by using RRC signaling (for example, CSI report configuration) may be updated to CMRs for a serving beam, based on a 1-bit flag indication corresponding to the CMRs transmitted with the MAC CE /DCI. For example, one or a plurality of CMRs in a CMR list for candidate beams may be updated to CMRs for a serving beam. When such a method is applied, a limitation may be provided that a serving cell/beam to be updated is required to be present in a CMR list configured by using RRC signaling.

### <<Option B>>

A UE may implicitly determine updating of a serving cell/beam in a CMR configuration, based on a joint/DL TCI indicated. This option may be applied only to a case that the number of serving beams to be configured is one.

Option B-1: A serving beam in a CMR configuration list by RRC signaling may be updated based on a new SSB/CSI-RS resource index corresponding to a joint/DL TCI indicated.
Option B-2: One CMR in a CMR configuration list by RRC signaling may be updated to be a serving cell, based on a joint/DL TCI indicated. For example, a 1-bit flag indication that corresponds to the joint/DL TCI indicated and corresponds to the CMR may be applied. When such a method is applied, a limitation may be provided that a serving cell/beam to be updated is required to be present in a CMR list configured by using RRC signaling.

A reindexing index procedure of an RS to be configured may differ depending on the above-described options applied.

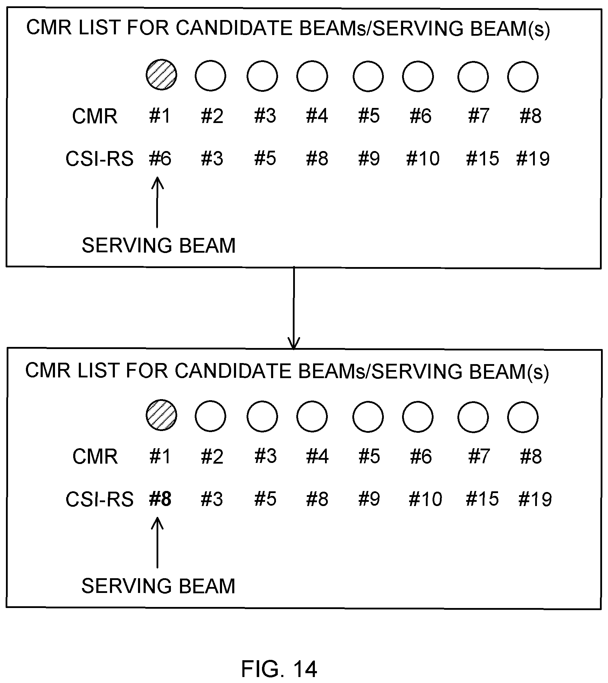

FIG. 14 is a diagram to show an example of updating of a serving beam in Options A-1 and B-1 according to the third embodiment. In the example in FIG. 14, CSI-RS #6 corresponding to the serving beam is updated to CSI-RS #8, based on a MAC CE / DCI or a corresponding joint/DL TCI. In this case a UE judges that the serving beam is updated to a beam corresponding to CSI-RS #8.

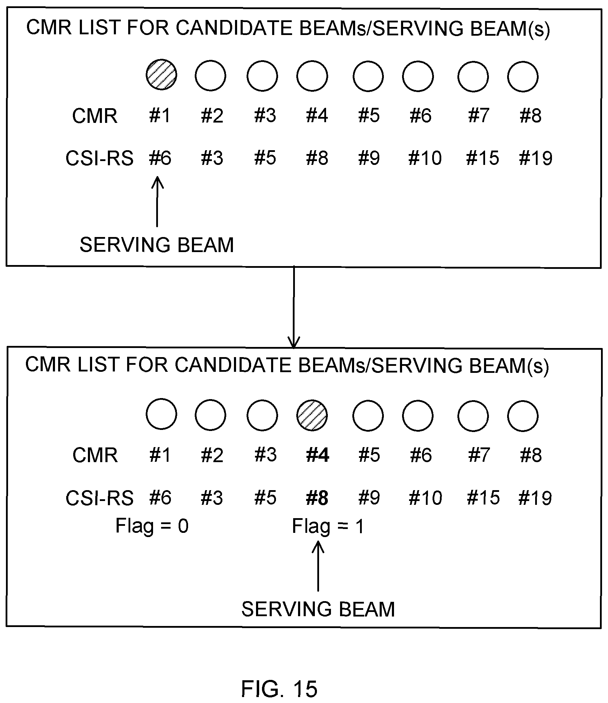

FIG. 15 is a diagram to show an example of updating of a serving beam in Options A-2 and B-2 according to the third embodiment. In the example in FIG. 15, Flag = 0 is configured for CSI-RS #6 of the serving beam by using a MAC CE / DCI or Flag = 0 is configured for a joint/DL TCI state corresponding to CSI-RS #6. Flag = 1 is configured for CSI-RS #8 of the serving beam by using a MAC CE / DCI or Flag = 1 is configured for a joint/DL TCI state corresponding to CSI-RS #8. In this case a UE judges that the serving beam is updated to a beam corresponding to CSI-RS #8.

Aspect 3.2 may be applied to updating of a candidate beam. In other words, the serving beam in Aspect 3.2 may be interpreted as a candidate beam.

### {Aspect 3.3}

A UE may receive a CSI report configuration (CSI-ReportConfig) for beam reporting triggered by the UE/event by using RRC signaling. The CSI report configuration may include a configuration related to a plurality of CMRs. In the configuration, whether each of the CMRs is for serving beam or for candidate beam may not be notified.

The UE may further receive, for each CMR of the CMRs, information for configuration/indication for determination of a serving beam or a candidate beam. For such configuration/indication, a method similar to that of Option A or B in Aspect 3.2 may be used.

For example, the UE may receive a MAC CE /DCI that configures/indicates a serving beam or a candidate beam.

Alternatively, for example, the UE may implicitly determine a serving cell/beam in a CMR configuration, based on a joint/DL TCI indicated. It may be determined that a CMR corresponding to the joint/DL TCI indicated is the serving beam or candidate beam.

When a method similar to Option A or B in Aspect 3.2 is applied, a limitation may be provided that a serving cell/beam to be configured/indicated is required to be present in a CMR list configured by using RRC signaling. The number of serving beams to be indicated/updated may be defined in a specification, or may be configured/indicated for a UE by using higher layer signaling / physical layer signaling.

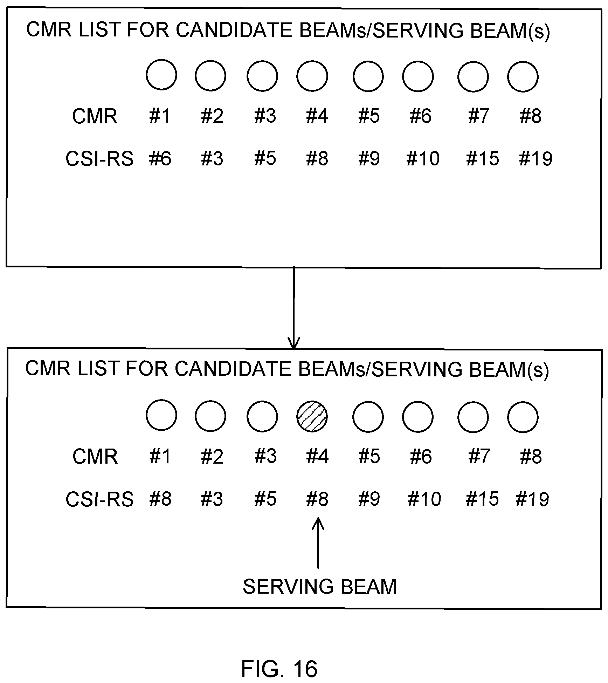

FIG. 16 is a diagram to show a configuration example of a serving beam according to Aspect 3.3. In FIG. 16, it is assumed that a CMR list for candidate beams / serving beam(s) shown in the upper diagram is configured by using RRC signaling (for example, CSI report configuration). Then, a UE receives an indication of CSI-RS #8 / CMR #4, in a MAC CE / DCI configuring/indicating a serving beam. Alternatively, it is assumed that a joint/DL TCI indicated for the UE corresponds to CSI-RS #8 / CMR #4. In this case the UE judges that the serving beam corresponds to CSI-RS #8 / CMR #4.

In FIG. 16, indication of a serving beam is described. Indication of a candidate beam may be performed similarly. In a case where a UE receives only an indication of a serving beam, the UE may judge that a CSI-RS/CMR, in a CMR list, corresponding to any one other than the serving beam corresponds to a candidate beam. In a case where a UE receives only an indication of a candidate beam, the UE may judge that a CSI-RS/CMR, in a CMR list, corresponding to any one other than the candidate beam corresponds to a serving beam.

The third embodiment enables a UE to appropriately transmit a beam report of a serving beam / candidate beam even in a case where a serving beam / candidate beam is dynamically changed by beam switch / cell switch.

### <Fourth Embodiment>

In the third embodiment, when one serving beam is configured/updated, for the serving beam explicitly configured, at least one example in the second embodiment may be applied.

In the third embodiment, when a plurality of serving beams are configured/updated, for the serving beams explicitly configured, at least one example in the second embodiment may be applied.

### <<Option 1>>

A UE may report quality of one best serving beam all the time.
1-1: The UE may report an index of the serving beam selected (best serving beam).
1-2: The UE reports no index of the serving beam selected (best serving beam).

### <<Option 2>>

A UE may not report quality of a serving beam all the time. The UE may not report an RS index of the serving beam all the time.

### <<Option 3>>

A UE may report a value (one quality) obtained by filtering/averaging qualities of a plurality of serving beams all the time. The UE may report no index of the serving beams.

### <<Option 4>>

A UE may receive, by using higher layer signaling / physical layer signaling, configuration information indicating whether to report a quality of a serving beam.

4-1: The UE may report, in a case of reporting qualities of a plurality of serving beams, an index of a serving beam selected (best serving beam).
4-2: The UE may report, in a case of reporting qualities of a plurality of serving beams, an index of a serving beam selected (best serving beam).

In a case where Options 1 to 3 are applied, only one serving beam quality is transmitted (or not transmitted), and thus communication capacity can be suppressed. In a case where Option 4 is applied, a plurality of serving beam qualities are reported, and thus comparison of serving beams is possible on the NW side.

In a case where a plurality of serving beams are configured/updated according to the third embodiment, for reporting of the serving beams, the second embodiment may be applied.

In the fourth embodiment, different examples/options may be applied depending on configurations or the like below. MIMO/LTM may be MIMO/LTM of Rel. 19, for example.
- MIMO or LTM (Rel. 19)
- intra-cell or inter-cell in a case where MIMO is applied
- intra-cell or inter-cell in a case where LTM is applied
- an event to be applied (for example, Event A2, A3, A4, A5, or the like described above)
- UCI-based reporting or MAC CE-based reporting

The present embodiment enables reporting related to a serving beam (for example, a plurality of serving beams) to be appropriately performed.

### <Supplements>

### <<Notification of Information to UE>>

Any notification of information [from a network (NW) (for example, a base station (BS))] to a UE (in other words, any reception, in a UE, of information from a BS) in the above-described embodiments may be performed by using physical layer signaling (for example, DCI), higher layer signaling (for example, RRC signaling, MAC CE), a specific signal/channel (for example, PDCCH, PDSCH, reference signal), or any combination of them.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### <<Notification of Information from UE>>

Any notification of information from a UE [to a NW] (in other words, any transmission/reporting, by a UE, of information to a BS) in the above-described embodiments may be performed by using physical layer signaling (for example, UCI), higher layer signaling (for example, RRC signaling, MAC CE), a specific signal/channel (for example, PUCCH, PUSCH, PRACH, reference signal), or any combination of them.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### <<Application of Respective Embodiments>>

In a UE/BS, specific (one or a plurality of) processing/operation/control/assumption/information for at least one embodiment of the above-described embodiments may be applied (may be used) in a case where any one or more of conditions below are satisfied.
- A higher layer parameter indicating the specific processing/operation/control/assumption/information is configured.
- The specific processing/operation/control/assumption/information is determined based on a related higher layer parameter.
- The specific processing/operation/control/assumption/information is indicated/activated/triggered by a MAC CE / DCI / UCI/ resource / channel / RS.
- A specific UE capability indicating (or related to) the specific processing/operation/control/assumption/information is reported or supported.
- Application of the specific processing/operation/control/assumption/information is judged based on a specific condition.

The specific UE capability may indicate at least one of the following:
- supporting of the specific processing/operation/control/assumption/information
- the number of CMRs to be configured for a candidate beam
- the number of serving beams to be selected/reported
- the number of candidate beams to be selected/reported

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

In a case where none of the conditions described above is satisfied, the UE/BS may follow an operation defined in an existing 3GPP release.

### (Supplementary Note)

Regarding one embodiment of the present disclosure, the following supplementary notes of the invention will be given.

### {Supplementary Note 1}

A terminal including:
a receiving section that receives, in a case where Multi Input Multi Output (MIMO) is applied, configuration information for Channel State Information (CSI) reporting triggered by the terminal or an event; and
a control section that performs, based on the configuration information, CSI reporting of at least one of a serving beam and a candidate beam.

### {Supplementary Note 2}

The terminal according to supplementary note 1, wherein
the control section determines, based on a Transmission Configuration Indication (TCI) state indicated, a serving beam for measurement and performs CSI reporting of the serving beam determined.

### {Supplementary Note 3}

The terminal according to supplementary note 1 or 2, wherein
the CSI reporting includes a measurement result of a serving beam and a measurement result of a candidate beam and includes a measurement result of a best beam out of the beams and a differential value with respect to the measurement result of the best beam.

### {Supplementary Note 4}

The terminal according to any one of supplementary notes 1 to 3, wherein
the receiving section further receives a Medium Access Control Control Element (MAC CE) or Downlink Control Information (DCI) for updating of a configuration of a serving beam in the configuration information.

### (Supplementary Note)

Regarding one embodiment of the present disclosure, the following supplementary notes of the invention will be further given.

### {Supplementary Note 1}

A terminal including:
a receiving section that receives, in a case where L1L2-triggered mobility (LTM) is applied, configuration information for Channel State Information (CSI) reporting triggered by the terminal or an event; and
a control section that performs, based on the configuration information, CSI reporting of at least one of a serving beam and a candidate beam.

### {Supplementary Note 2}

The terminal according to supplementary note 1, wherein
the control section determines, based on a Transmission Configuration Indication (TCI) state indicated, a serving beam for measurement and performs CSI reporting of the serving beam determined.

### {Supplementary Note 3}

The terminal according to supplementary note 1 or 2, wherein
the CSI reporting includes a measurement result of a serving beam and a measurement result of a candidate beam and includes a measurement result of a best beam out of the beams and a differential value with respect to the measurement result of the best beam.

### {Supplementary Note 4}

The terminal according to any one of supplementary notes 1 to 3, wherein
the receiving section further receives a Medium Access Control Control Element (MAC CE) or Downlink Control Information (DCI) for updating of a configuration of a serving beam in the configuration information.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

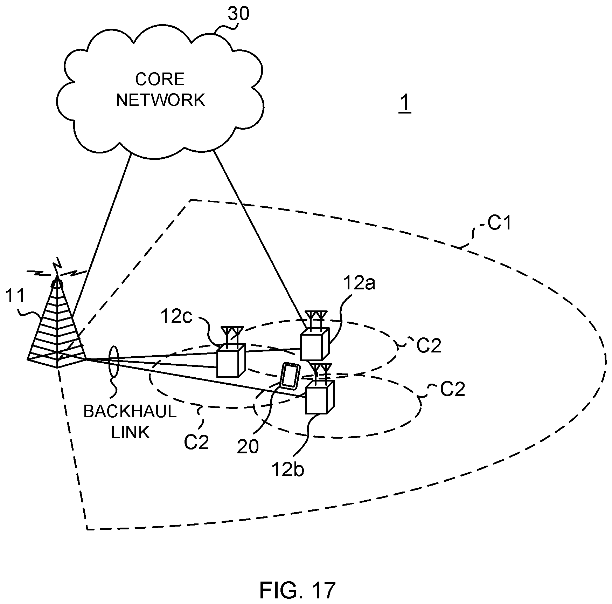

FIG. 17 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, the shape, the size, and the like of the cells and user terminals 20 are by no means limited to the aspect shown in the diagram. Hereinafter, the base stations 11 and 12 will be collectively referred to as "base stations 10," unless specified otherwise.

Note that the radio communication system 1 may use Multi Input Multi Output (MIMO). For example, one cell may be formed by one antenna/base station 10 or may be formed by a plurality of antennas/base stations 10. One [virtual] cell (which may be referred to as, for example, a super cell) may be constituted by a plurality of [virtual] cells (which may be referred to as, for example, subcells). The super cell may correspond to a cell with a fixed physical range, and the sub-cells may each correspond to a cell with a physical range that fluctuates semi-statically/dynamically. In this case, the radio communication system 1 may be referred to as a cell-free system.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2/Xn interface, or the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

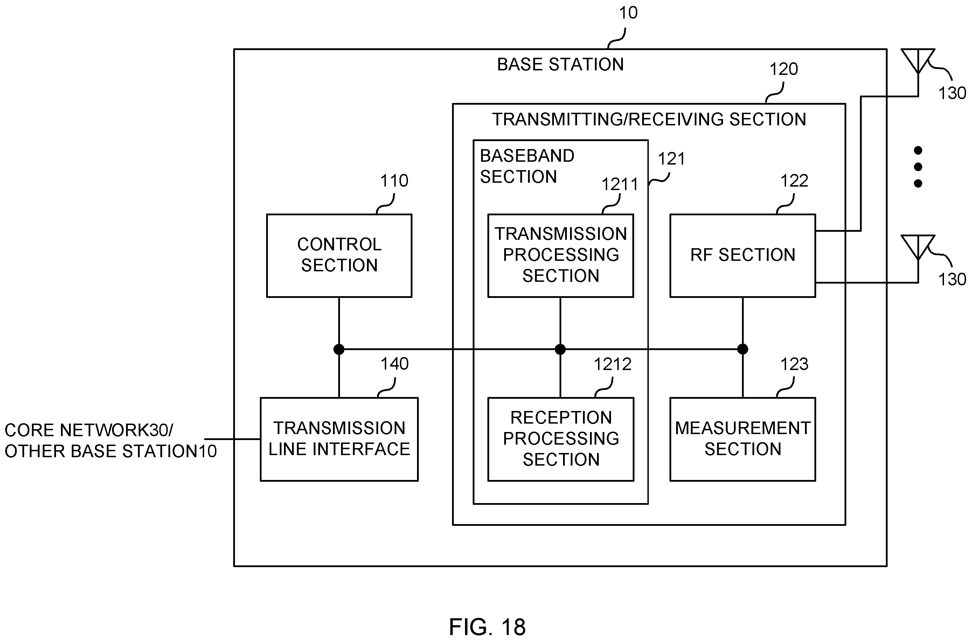

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the base station 10 may be divided into three elements that are a radio unit (RU), a distributed unit (DU), and a central unit (CU). For example, the RU may implement RF processing (such as digital beam forming, digital-analogue conversion, and analogue beam forming) and physical layer lower functions (such as precoding, IFFT, and FFT). The DU may implement physical layer higher functions (such as from coding to resource element mapping), MAC layer functions, and RLC layer functions. The CU may implement functions of a PDCP layer, a Service Data Adaptation Protocol (SDAP) layer, and an RRC layer.

In the present disclosure, the base station 10 may include one apparatus that implements all the RU, DU, and CU functions or may include a plurality of apparatuses connected to each other that each implement part of the RU, DU, and CU functions. In the present disclosure, the base station 10 and the RU/DU/CU may be interchangeably interpreted.

In a case where Multi Input Multi Output (MIMO) or L1L2-triggered mobility (LTM) is applied, the transmitting/receiving section 120 may transmit configuration information for Channel State Information (CSI) reporting triggered by a terminal or an event.

The control section 110 may control reception of CSI reporting of at least one of a serving beam and a candidate beam, the CSI reporting transmitted based on the configuration information.

### (User Terminal)

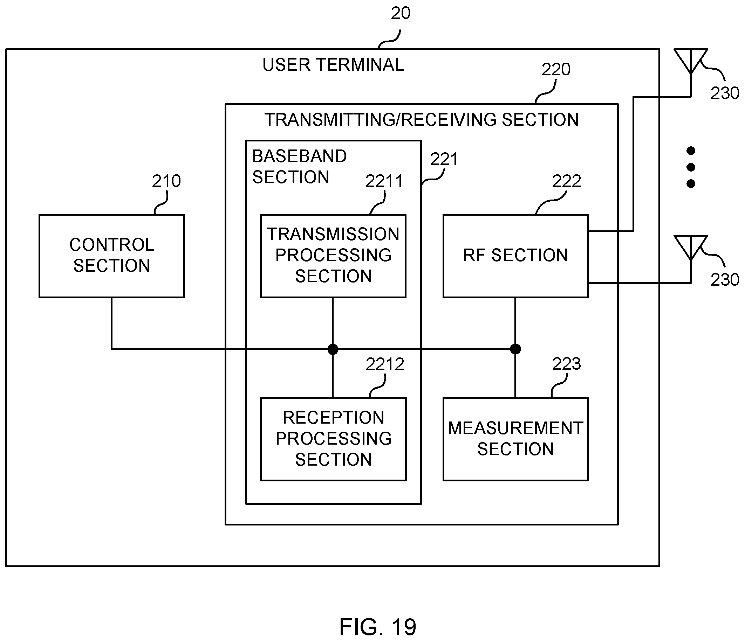

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

In a case where Multi Input Multi Output (MIMO) or L1L2-triggered mobility (LTM) is applied, the transmitting/receiving section 220 may receive configuration information for Channel State Information (CSI) reporting triggered by a terminal or an event.

The control section 210 may perform, based on the configuration information, CSI reporting of at least one of a serving beam and a candidate beam.

Based on a Transmission Configuration Indication (TCI) state indicated, the control section 210 may determine a serving beam for measurement and perform CSI reporting of the serving beam determined.

The CSI reporting may include a measurement result of a serving beam and a measurement result of a candidate beam and include a measurement result of the best beam out of the beams and a differential value with respect to the measurement result of the best beam.

The transmitting/receiving section 220 may further receive a Medium Access Control Control Element (MAC CE) or Downlink Control Information (DCI) for updating of a configuration of a serving beam in the configuration information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

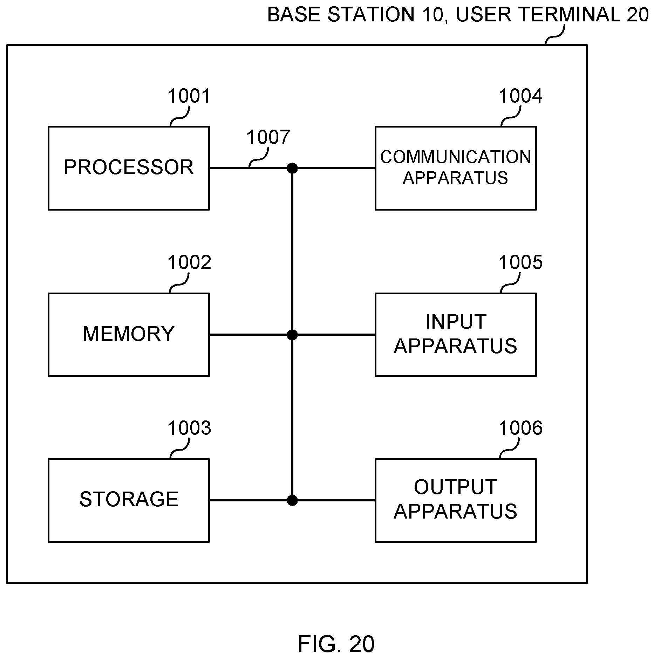

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

It should be noted that an apparatus (e.g., a network node providing NF) included in the core network 30 may also be realized by the functional blocks / hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE / base station) to any second device (e.g., base station / UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

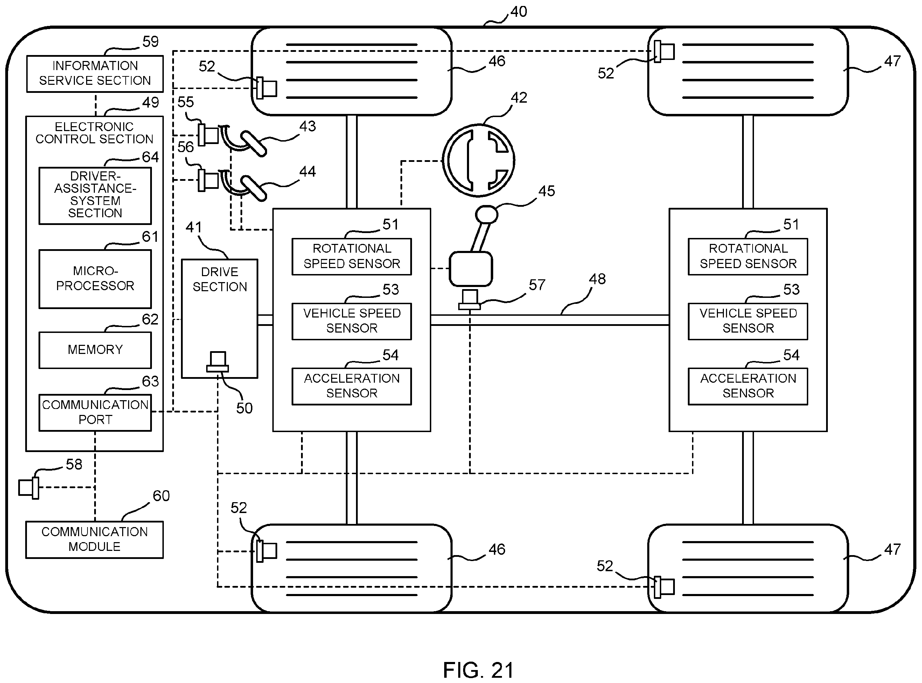

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...", "..." (if "..." above is a to-infinitive, this "..." is a verb without "to"), or the like. "Does not expect ..." may be used interchangeably with "be not expected ...", "does not ..." (if "..." above is a to-infinitive, this "..." is a verb without "to"), or the like. Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives, in a case where Multi Input Multi Output (MIMO) is applied, configuration information for Channel State Information (CSI) reporting triggered by the terminal or an event; and
a control section that performs, based on the configuration information, CSI reporting of at least one of a serving beam and a candidate beam.

2. The terminal according to claim 1, wherein
the control section determines, based on a Transmission Configuration Indication (TCI) state indicated, a serving beam for measurement and performs CSI reporting of the serving beam determined.

3. The terminal according to claim 1, wherein
the CSI reporting includes a measurement result of a serving beam and a measurement result of a candidate beam and includes a measurement result of a best beam out of the beams and a differential value with respect to the measurement result of the best beam.

4. The terminal according to claim 1, wherein
the receiving section further receives a Medium Access Control Control Element (MAC CE) or Downlink Control Information (DCI) for updating of a configuration of a serving beam in the configuration information.

5. A radio communication method for a terminal, the radio communication method comprising:
receiving, in a case where Multi Input Multi Output (MIMO) is applied, configuration information for Channel State Information (CSI) reporting triggered by the terminal or an event; and
performing, based on the configuration information, CSI reporting of at least one of a serving beam and a candidate beam.

6. A base station comprising:
a transmitting section that transmits, in a case where Multi Input Multi Output (MIMO) is applied, configuration information for Channel State Information (CSI) reporting triggered by a terminal or an event; and
a control section that controls reception of CSI reporting of at least one of a serving beam and a candidate beam, the CSI reporting transmitted based on the configuration information.
